# EUROPEAN PATENT APPLICATION

(11) **EP 4 803 767 A1**
(43) Date of publication of application: **09.09.2026**
(21) Application number: 24885442.4
(22) Date of filing: 16.10.2024
(51) Int. Cl.: F16C 35/067, F16C 19/52, G01K 1/14, G01K 1/024, G06K 19/07

(54) **MACHINE COMPONENT AND MONITORING SYSTEM**

(30) Priority: 02.11.2023 JP 2023188436
(71) Applicant: NSK Ltd., Tokyo 141-8560 (JP)
(72) Inventor: KONDOU, Masateru, Fujisawa-shi, Kanagawa 251-8501 (JP); TANAKA, Sadayuki, Fujisawa-shi, Kanagawa 251-8501 (JP); KUBOKAWA, Minoru, Fujisawa-shi, Kanagawa 251-8501 (JP); KUWAHARA, Masaki, Fujisawa-shi, Kanagawa 251-8501 (JP); YOSHIDA, Kyohei, Tokyo 105-8311 (JP); ODANAKA, Hiromu, Tokyo 105-8311 (JP)
(74) Representative: SSM Sandmair
(86) International application number: PCT/JP2024/036820
(87) International publication number: WO 2025/094668

(57) **Abstract**

A mechanical component 40 includes a housing 41; a bearing 42 that is disposed in the housing 41 and rotatably supports a shaft member 31 with respect to the housing 41; and a temperature sensor 43b that is disposed on an outer surface of the housing 41 and detects a temperature of the housing 41. When the housing 41 is viewed along an axial direction of the bearing 42, the temperature sensor 43b overlaps with a portion of the housing 41 where a stress generated by the force acting from the bearing 42 is maximized.

## Description

### Field

The present disclosure relates to a mechanical component and a monitoring system.

### Background

Patent Literature 1 discloses a bearing unit for a conveyance device as an example of a mechanical component. The mechanical component of Patent Literature 1 includes a housing, a bearing disposed in the housing, a sensor that detects a status of the bearing, and a transmitter that wirelessly transmits information detected by the sensor.

The bearing, the sensor, and the transmitter are disposed in the housing. The sensor is a temperature sensor, for example, and detects the temperature of the bearing. The change in state of the bearing may bring about an increase in the temperature of the bearing, leading to occurrence of an abnormality in the bearing in some cases. The mechanical component of Patent Literature 1 can contribute to the detection of the abnormality in the bearing based on the temperature detected by the temperature sensor.

### Citation List

### Patent Literature

Patent Literature 1: JP 2013-11312 A

### Summary

### Technical Problem

The mechanical component of Patent Literature 1 further includes a cover that covers the sensor and the transmitter in the housing, and a seal member that prevents dust, etc. from entering between the housing and the cover. In this manner, the mechanical component of Patent Literature 1 has increased number of components because of the presence of the sensor, etc. in the housing, making it difficult to have a simple configuration. In addition, regarding a mechanical component having a bearing, there is a demand for early detection of an abnormality in the bearing.

The present disclosure aims to achieve, in a mechanical component including a bearing and a monitoring system including the mechanical component, a simplified configuration and an early detection of an abnormality in the bearing.

### Solution to Problem

A mechanical component according to an aspect of the present disclosure includes a housing; a bearing that is disposed in the housing and rotatably supports a shaft member with respect to the housing; and a temperature sensor that is disposed on an outer surface of the housing and detects a temperature of the housing. When the housing is viewed along an axial direction of the bearing, the temperature sensor overlaps with a portion of the housing where a stress generated by a force acting from the bearing is maximized.

With this configuration, the temperature sensor is disposed on the outer surface of the housing. This makes it possible to simplify the configuration in the housing and the configuration of the mechanical component. In addition, if a state change in the bearing progresses due to the load from the shaft member, the temperature of the portion where the state change progresses is increased. The heat of the bearing is transferred to the housing. In the portion of the housing in contact with the portion of the bearing where the state change progresses, the temperature increases earlier as compared to other portions of the housing. In addition, the portion of the housing in contact with the portion of the bearing where the state change progresses corresponds to a portion where a stress generated by the force acting from the bearing is maximized. Accordingly, the temperature detected by the temperature sensor increases early in response to the temperature increase of the bearing and the temperature increase of the housing. This makes it possible for the mechanical component to contribute to the achievement of early detection of an abnormality in the bearing based on the temperature detected by the temperature sensor.

In the mechanical component according to an aspect of the present disclosure, an axis of the bearing is inclined with respect to a direction of gravity in a state where the housing is attached to an attachment base member. When the housing is viewed along the axial direction of the bearing in a state where the housing is attached to the attachment base member, the temperature sensor is located on a lower side of the axis of the bearing in the direction of gravity.

With this configuration, a portion of the housing located on the lower side of the axis of the bearing in the direction of gravity corresponds to a portion where a stress generated by the force acting from the bearing is maximized. Accordingly, the temperature detected by the temperature sensor increases early with reliability in response to the temperature increase of the bearing and the temperature increase of the housing. This makes it possible to contribute to the achievement, with reliability, of early detection of an abnormality in the bearing based on the temperature detected by the temperature sensor.

The mechanical component according to an aspect of the present disclosure includes an RFID tag that is formed integrally with the temperature sensor and configured to transmit the temperature detected by the temperature sensor to a reader/writer.

With this configuration, the mechanical component can output information on the temperature detected by the temperature sensor, with a simple configuration.

A monitoring system according to an aspect of the present disclosure includes a mechanical device including a plurality of the mechanical components described above; the reader/writer; and a terminal device that is electrically connected to the reader/writer and configured to store the temperature detected by the temperature sensor.

With this configuration, the reader/writer quickly acquires the temperature detected by the temperature sensor, from the plurality of mechanical components. Accordingly, the terminal device can easily acquire, via the reader/writer, the temperature detected by the plurality of temperature sensors. Accordingly, even in a case of including the plurality of mechanical components, the monitoring system can detect an abnormality in the bearing early with a simple configuration.

### Brief Description of Drawings

FIG. 1 is a diagram illustrating a configuration of a monitoring system.
FIG. 2 is a front view of a mechanical component.
FIG. 3 is a cross-sectional view of the mechanical component taken along line III-III illustrated in FIG. 2.
FIG. 4 is a plan view of a temperature detection device.
FIG. 5 is an enlarged cross-sectional view of the temperature detection device illustrated in FIG. 3.
FIG. 6 is a block diagram of an RFID tag.
FIG. 7 is a cross-sectional view of a temperature detection device in a mechanical component according to a first modification of the embodiment of the present disclosure.
FIG. 8 is a cross-sectional view of a temperature detection device in a mechanical component according to a second modification of the embodiment of the present disclosure.
FIG. 9 is a cross-sectional view of a temperature detection device in a mechanical component according to a third modification of the embodiment of the present disclosure.
FIG. 10 is a cross-sectional view of a temperature detection device in a mechanical component according to a fourth modification of the embodiment of the present disclosure.

### Description of Embodiments

Hereinafter, embodiments according to the present disclosure will be described with reference to the drawings, but the present disclosure is not limited thereto. The constituent elements of each embodiment and each modification described below can be appropriately combined. In addition, some components are not used in some cases.

### <Monitoring system 1>

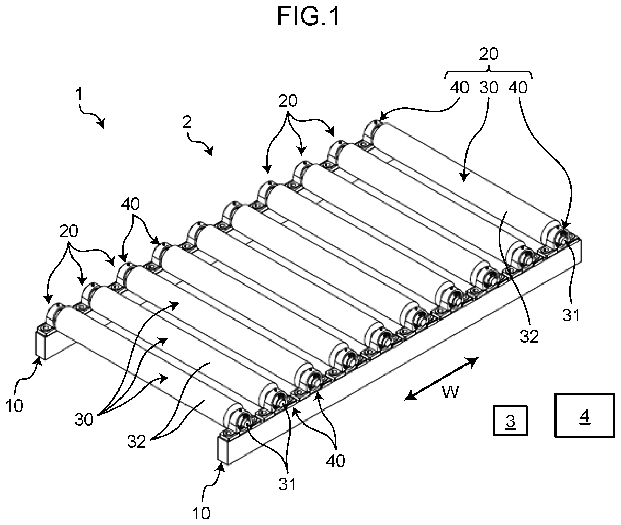

FIG. 1 is a diagram illustrating a configuration of a monitoring system 1. The monitoring system 1 is a system that monitors a mechanical component 40 including a bearing 42 to be described below. The monitoring system 1 includes a mechanical device 2, a reader/writer 3, and a terminal device 4. Additionally, the monitoring system 1 may include a plurality of the mechanical devices 2.

The mechanical device 2 is a roller conveyor that conveys an industrial product along a conveyance direction W. The mechanical device 2 includes a pair of support bases 10 and a plurality of roller devices 20. The support base 10 corresponds to an "attachment base member". In the present embodiment, the number of the roller devices 20 is ten, but the number is not limited thereto.

The pair of support bases 10 supports the roller devices 20. Each of the support bases 10 has a rectangular parallelepiped shape extending along the conveyance direction W.

The roller device 20 includes a roller member 30 and a pair of the mechanical components 40.

The roller member 30 includes a shaft member 31 and a roller 32. The shaft member 31 has a columnar shape extending along the central axis.

The roller 32 has a cylindrical shape disposed on the circumferential side surface of the shaft member 31, and rotates integrally with the shaft member 31. Both ends of the shaft member 31 are exposed from the roller 32.

The pair of mechanical components 40 rotatably supports the roller member 30. Specifically, the pair of mechanical components 40 rotatably supports both ends of the shaft member 31. The mechanical component 40 is a plummer block. The mechanical component 40 includes the bearing 42 and a Radio Frequency Identification (RFID) tag 43a integrally formed with a temperature sensor 43b, which are to be described later. Details of the mechanical component 40 will be described later.

The pair of mechanical components 40 is fixed to the pair of support bases 10 by using, for example, fixing bolts, whereby the roller devices 20 are supported by the pair of support bases 10. The roller devices 20 are disposed in a state where the central axes of the shaft members 31 are parallel to each other and the central axis of each shaft member 31 is orthogonal to the conveyance direction W.

The reader/writer 3 wirelessly communicates with the RFID tag 43a included in the mechanical component 40. The reader/writer 3 can be carried by a user. The reader/writer 3 is electrically connected to the terminal device 4 in a wired or wireless connection.

The user operates the reader/writer 3 to transmit a carrier wave from the reader/writer 3 toward the RFID tag 43a. In response to this, the RFID tag 43a transmits, to the reader/writer 3, the temperature that has been detected by the temperature sensor 43b (hereinafter, denoted as the temperature detected by the temperature sensor 43b). The reader/writer 3 acquires the temperature detected by the temperature sensor 43b and transmits the acquired temperature to the terminal device 4.

The reader/writer 3 can wirelessly communicate with the plurality of RFID tags 43a simultaneously. Accordingly, the reader/writer 3 can relatively quickly acquire the temperatures detected by the plurality of temperature sensors 43b. The reader/writer 3 transmits the temperatures detected by the plurality of temperature sensors 43b to the terminal device 4.

The terminal device 4 is a computer, and includes, for example, a Central Processing Unit (CPU), Read Only Memory (ROM), Random Access Memory (RAM), an internal storage, an input interface, and an output interface. The CPU, the ROM, the RAM, and the internal storage are connected to each other by an internal bus. The ROM stores programs such as BIOS. The internal storage is, for example, a Hard Disk Drive (HDD), flash memory, etc., and stores an operating system program and an application program. The CPU executes a program stored in the ROM or the internal storage using the RAM as a work area to implement various functions.

The terminal device 4 acquires the temperature detected by the temperature sensor 43b from the reader/writer 3. Based on the temperature detected by the temperature sensor 43b, the terminal device 4 detects the abnormality in the bearing 42 before occurrence of a failure of the bearing 42 in the mechanical component 40.

The abnormality in the bearing 42 occurs when a state change (for example, change over time) of the bearing 42 progresses due to the load acting from the shaft member 31. Disregarding the abnormality in the bearing 42 leads to the failure of the bearing 42 and the failure of the mechanical component 40. Therefore, the terminal device 4 detects the abnormality in the bearing 42 occurring before occurrence of the failure of the bearing 42.

The progress of the state change in the bearing 42 brings about an increase in the temperature detected by the temperature sensor 43b (details will be described later). When the temperature detected by the temperature sensor 43b is equal to or greater than a predetermined temperature, the terminal device 4 determines that there is an abnormality in the bearing 42. Based on the determination result of the terminal device 4, the user examines the mechanical component 40 determined to have an abnormality.

The user can detect the abnormality in the bearing 42 early by periodically checking the temperature detected by the temperature sensor 43b, using the terminal device 4.

As described above, according to the present embodiment, the monitoring system 1 includes: the mechanical device 2 including the plurality of mechanical components 40; the reader/writer 3; and the terminal device 4 electrically connected to the reader/writer 3 and configured to store the temperature detected by the temperature sensor 43b.

With this configuration, the reader/writer 3 relatively quickly acquires the temperature detected by the temperature sensor 43b, from the plurality of mechanical components 40. Accordingly, the terminal device 4 can easily acquire, via the reader/writer 3, the temperature detected by the plurality of temperature sensors 43b. Accordingly, even in a case of including the plurality of mechanical components 40, the monitoring system 1 can detect an abnormality in the bearing 42 early with a simple configuration.

### <Mechanical component 40>

In the following description, a Z direction illustrated in the drawings is an up-down direction of the mechanical component 40, an X direction is a left-right direction of the mechanical component 40, and a Y direction is a front-rear direction of the mechanical component 40. The X direction, the Y direction, and the Z direction are orthogonal to each other. The directions of X, Y, and Z are examples, and the present disclosure is not limited to these directions.

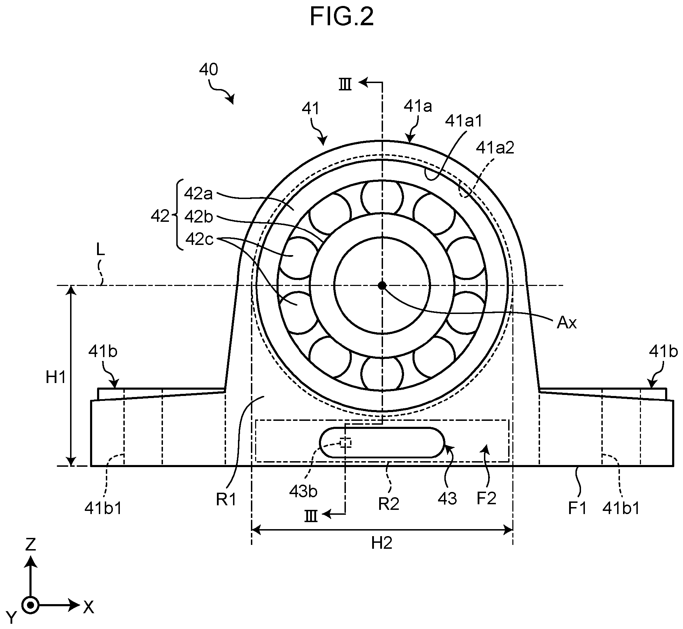

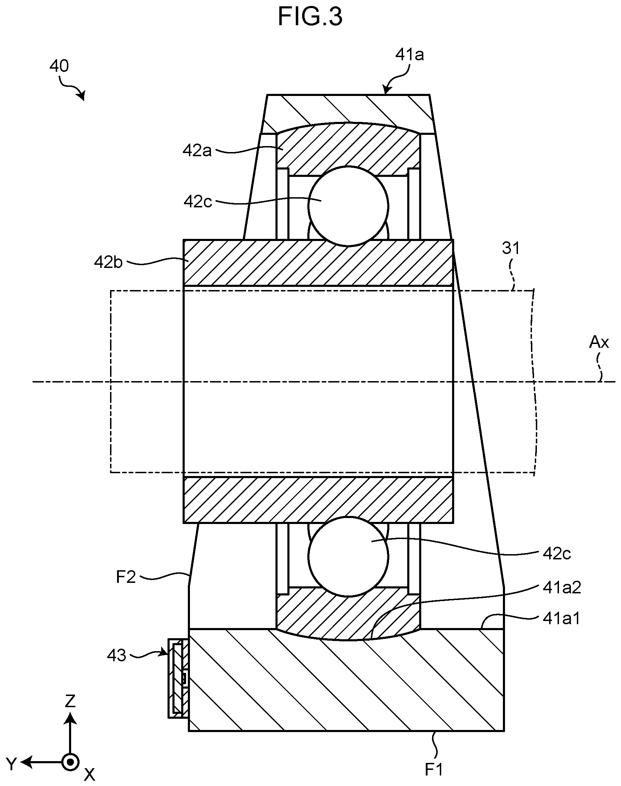

FIG. 2 is a front view of the mechanical component 40. FIG. 3 is a cross-sectional view of the mechanical component 40 taken along line III-III illustrated in FIG. 2. The mechanical component 40 includes a housing 41, the bearing 42, and a temperature detection device 43.

The housing 41 integrally includes a main body 41a and a flange 41b. The main body 41a has a first through-hole 41a1 through which the shaft member 31 passes.

The flange 41b is provided on both sides of the main body 41a in the X direction. The flange 41b has a second through-hole 41b1 through which a bolt for attaching the mechanical component 40 to the support base 10 passes.

The lower surface (surface on the -Z side) of the housing 41 corresponds to an attachment surface F1 in contact with the support base 10. The attachment surface F1 is flat. The attachment surface F1 is orthogonal to the Z direction. In a state where the mechanical component 40 is attached to the support base 10, the Z direction is substantially parallel to the direction of gravity. Accordingly, the attachment surface F1 is substantially orthogonal to the direction of gravity and faces the lower side in the direction of gravity in a state where the mechanical component 40 is attached to the support base 10.

The bearing 42 is disposed in the housing 41 and rotatably supports the shaft member 31 with respect to the housing 41. An axis Ax of the bearing 42 extends along the Y direction. That is, the axis Ax of the bearing 42 is substantially orthogonal to the direction of gravity in a state where the housing 41 is attached to the support base 10. In the present specification, the state where the axis Ax is inclined with respect to the direction of gravity includes the state where the axis Ax is orthogonal to the direction of gravity. The axis Ax of the bearing 42 is substantially parallel to the central axis of the shaft member 31.

The bearing 42 is a ball bearing. Alternatively, the bearing 42 may be a roller bearing. The bearing 42 is disposed in the first through-hole 41a1. The bearing 42 includes an outer ring 42a, an inner ring 42b, and a plurality of balls 42c.

The outer ring 42a is fitted into a groove 41a2 having an annular shape and being located in the inner circumferential surface of the first through-hole 41a1. The outer ring 42a is fixed to the housing 41. The inner ring 42b is provided on the inner side of the outer ring 42a. The shaft member 31 is fixed to the inner ring 42b such that they are integrally rotatable. The balls 42c are disposed between the outer ring 42a and the inner ring 42b.

When the shaft member 31 rotates with respect to the housing 41, the inner ring 42b rotates with respect to the outer ring 42a. At this time, the balls 42c roll with respect to the outer ring 42a and the inner ring 42b.

The temperature detection device 43 is disposed on the outer surface of the housing 41 and detects the temperature of the housing 41. The temperature detection device 43 is disposed on a front surface F2 (surface on the +Y side) of the outer surface of the housing 41. When the housing 41 is viewed along the axial direction of the bearing 42 in a state where the housing 41 is attached to the support base 10, the temperature detection device 43 is located on the lower side of the axis Ax of the bearing 42 in the direction of gravity. The axial direction of the bearing 42 is a direction along which the axis Ax extends.

In a state where the housing 41 is attached to the support base 10 as described above, the attachment surface F1 of the housing 41 is substantially orthogonal to the direction of gravity and faces to the lower side in the direction of gravity. Accordingly, as illustrated in FIG. 2, the temperature detection device 43 is positioned in an arrangement region R1 on the -Z side of the axis Ax of the bearing 42, on the front surface F2 of the housing 41. In FIG. 2, the arrangement region R1 of the front surface F2 of the housing 41 corresponds to an overlapping region where a region H1 and a region H2 overlap with each other, wherein the region H1 is a region between the attachment surface F1 and the imaginary line L that passes through the axis Ax of the bearing 42 and is parallel to the X direction, and the region H2 is a region corresponding to the bearing 42 in the X direction. In the present embodiment, the temperature detection device 43 is positioned in a partial region R2 in the arrangement region R1 on the -Z side of the outer circumferential surface of the bearing 42 in the Z direction.

When the housing 41 is viewed along the axial direction of the bearing 42 in a state where the housing 41 is attached to the support base 10, at least a temperature sensor 43b of the temperature detection device 43 described later only needs to overlap the arrangement region R1 (or the partial region R2).

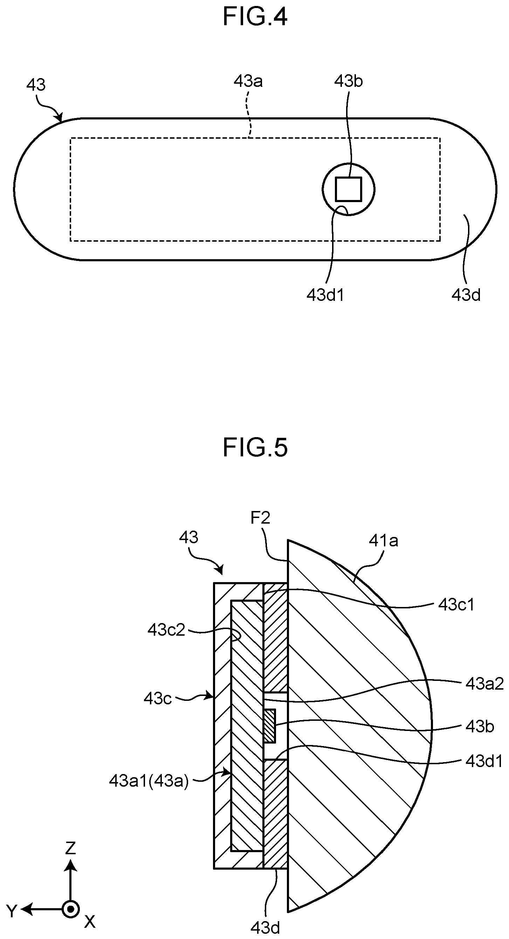

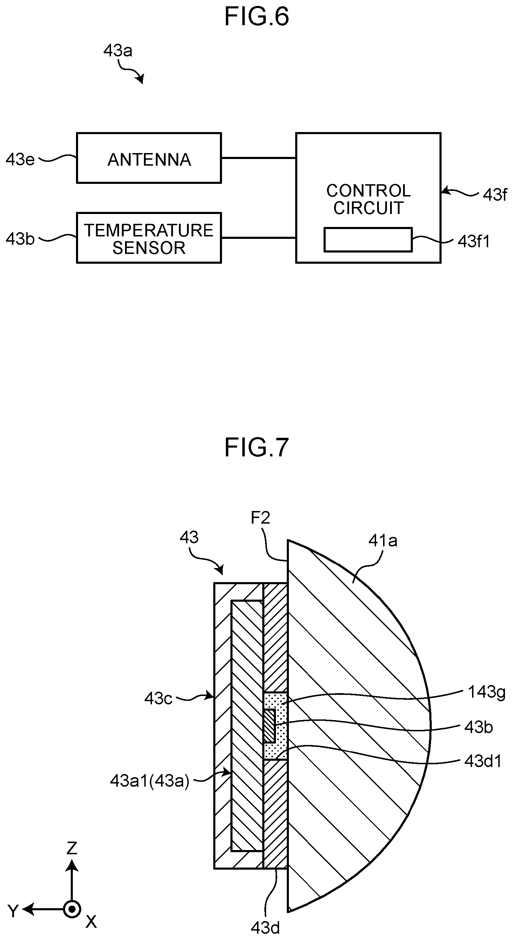

FIG. 4 is a plan view of the temperature detection device 43. FIG. 5 is an enlarged cross-sectional view of the temperature detection device 43 illustrated in FIG. 3. FIG. 6 is a block diagram of the RFID tag 43a.

The temperature detection device 43 includes an RFID tag 43a, a temperature sensor 43b, a cover member 43c, and an adhesive member 43d. The RFID tag 43a is formed integrally with the temperature sensor 43b.

The RFID tag 43a is a passive RFID tag. The RFID tag 43a includes a substrate 43a1 illustrated in FIG. 5. A resin base, a ceramic base, a plastic base, etc. can be used for the base of the substrate 43a1. The conductor portion of the substrate 43a1 is formed by applying metal plating onto the surface of the base. The conductor portion may be formed of a conductive foil. Alternatively, the conductor portion may be formed by screen printing, inkjet printing, etc. using a polymer conductive ink. A temperature sensor 43b, an antenna 43e illustrated in FIG. 6, and a control circuit 43f are disposed on the substrate 43a1.

The temperature sensor 43b detects the temperature of the housing 41. That is, the temperature detected by the temperature sensor 43b corresponds to the temperature detected by the temperature detection device 43.

As illustrated in FIG. 5, the temperature sensor 43b is disposed on a principal surface 43a2 of the substrate 43a1. In a state where the temperature detection device 43 is disposed in the housing 41, the temperature sensor 43b faces the outer surface (front surface F2) of the housing 41. There is a space between the temperature sensor 43b and the outer surface of the housing 41. This inhibits the transmission of vibration of the mechanical component 40 to the temperature sensor 43b, thus reducing the failure of the temperature sensor 43b.

The control circuit 43f illustrated in FIG. 6 is electrically connected to the temperature sensor 43b and the antenna 43e. The antenna 43e receives a carrier wave from the reader/writer 3. The antenna 43e is formed with a known structure. For example, the antenna 43e can be formed by applying a structure of an inverted-F antenna described in JP 4990858 B. In this case, the antenna 43e can perform communication even when the temperature detection device 43 is attached to the surface of a metal member. The control circuit 43f is driven by power generated by a carrier wave.

The control circuit 43f acquires the temperature detected by the temperature sensor 43b and stores the acquired temperature in a storage region 43f1. The control circuit 43f transmits the temperature detected by the temperature sensor 43b and stored in the storage region 43f1 to the reader/writer 3 via the antenna 43e.

In addition, the control circuit 43f transmits, to the reader/writer 3, identification information (for example, an identification number) identifying the mechanical component 40 in association with the temperature detected by the temperature sensor 43b. The identification information is stored in advance in the storage region 43f1 by the reader/writer 3. The terminal device 4 stores the temperature detected by the temperature sensor 43b and the identification information such that the temperature and the identification information are associated with each other. Accordingly, the terminal device 4 can specify the mechanical component 40 determined to have an abnormality in the bearing 42.

The control circuit 43f can be formed by using an IC chip on which the temperature sensor 43b is mounted. In this case, the control circuit 43f is integrally formed with the temperature sensor 43b. This achieves downsizing of the RFID tag 43a.

The cover member 43c illustrated in FIG. 5 protects the RFID tag 43a. The cover member 43c has a flat plate shape including a disposition surface 43c1. The disposition surface 43c1 is flat. The disposition surface 43c1 has a recess 43c2 in which the RFID tag 43a is disposed. In a plan view of the cover member 43c, the recess 43c2 is positioned at a central portion of the cover member 43c.

In addition, in a state where the RFID tag 43a is disposed in the recess 43c2, the disposition surface 43c1 of the cover member 43c and the principal surface 43a2 of the substrate 43a1 are on an identical plane. That is, in a state where the RFID tag 43a is disposed in the recess 43c2, the disposition surface 43c1 is provided over the entire circumference around the principal surface 43a2 of the substrate 43a1. The disposition surface 43c1 of the cover member 43c and the principal surface 43a2 of the substrate 43a1 may be on mutually different planes. In addition, the temperature sensor 43b protrudes from the disposition surface 43c1 in a state where the RFID tag 43a is disposed in the recess 43c2.

The material of the cover member 43c is thermoplastic resin. Specifically, the material of the cover member 43c is a nylon resin having waterproofness and oil resistance. Accordingly, the cover member 43c has waterproofness and oil resistance. The waterproofness and oil resistance of the cover member 43c inhibits a property change in the cover member 43c that would be caused by, for example, water, and oil and grease used for the mechanical component 40 during the use period of the mechanical component 40, whereby no problem occurs in operations of the temperature sensor 43b and the RFID tag 43a.

The adhesive member 43d is disposed on the disposition surface 43c1 of the cover member 43c, and bonds the RFID tag 43a and the cover member 43c to the outer surface (front surface F2) of the housing 41. The adhesive member 43d is also disposed on the principal surface 43a2 of the substrate 43a1. The adhesive member 43d has a third through-hole 43d1 in which the temperature sensor 43b is disposed. With this configuration, the temperature sensor 43b faces the outer surface of the housing 41 with a space therebetween. In addition, the space between the temperature sensor 43b and the outer surface of the housing 41 can be reduced by the third through-hole 43d1. Accordingly, the temperature sensor 43b can detect the temperature of the housing 41 with high accuracy.

The adhesive member 43d is a double-sided tape. The adhesive member 43d has waterproofness. The adhesive member 43d is also referred to as a waterproof tape. The waterproofness of the adhesive member 43d inhibits a property change in the adhesive member 43d that would be caused by water during the use period of the mechanical component 40, whereby no problem occurs in operations of the temperature sensor 43b and the RFID tag 43a.

In addition, the adhesive member 43d is disposed on the disposition surface 43c1 of the cover member 43c, over the entire circumference around the RFID tag 43a. Accordingly, watertightness is ensured between the cover member 43c and the outer surface of the housing 41, thereby reducing the adhesion of water to the temperature sensor 43b and the RFID tag 43a.

Next, operation of the mechanical component 40 when an abnormality occurs in the bearing 42 will be described.

When the mechanical device 2 illustrated in FIG. 1 conveys an industrial product, a downward load in the direction of gravity acts on the bearing 42 from the shaft member 31. The load from the shaft member 31 generates frictional forces between the ball 42c and the inner ring 42b and between the ball 42c and the outer ring 42a. If a state change of the bearing 42 progresses due to the frictional force, an abnormality such as damage in the bearing 42 may occur in some cases. The worsened abnormality in the bearing 42 leads to an occurrence of a failure such as seizure of the bearing 42.

In addition, if the state change in the bearing 42 progresses due to the frictional force, the temperature of the bearing 42 is increased. In the bearing 42, the portion where the temperature is maximized is the same as the portion where the frictional force is maximized, that is, the portion where the load from the shaft member 31 is maximized.

The load of the shaft member 31 is transferred to the housing 41 via the bearing 42. In the housing 41, a portion where a stress generated by the force acting from the bearing 42 is maximized corresponds to a portion in contact with a portion of the bearing 42 where the load acting from the shaft member 31 is maximized.

The heat of the bearing 42 is transferred to the housing 41. In the housing 41, a portion where the temperature is maximized corresponds to a portion in contact with a portion of the bearing 42 where the temperature of the bearing 42 is maximized.

As described above, in the bearing 42, the portion where the temperature is maximized is the same as the portion where the load from the shaft member 31 is maximized. Accordingly, in the housing 41, the portion where the temperature is maximized is the same as the portion where a stress generated by the force acting from the bearing 42 is maximized. Consequently, in the portion in the housing 41 where a stress generated by the force acting from the bearing 42 is maximized, the temperature increases earlier than the temperature of other portions.

In the present embodiment, the downward load in the direction of gravity (-Z side along the Z direction) acts on the bearing 42 from the shaft member 31. Accordingly, in the housing 41, a portion where a stress generated by the force acting from the bearing 42 is maximized is a portion on the -Z side of the axis Ax.

As described above, the temperature detection device 43 is in the arrangement region R1 on the -Z side of the axis Ax of the bearing 42 on the front surface F2 of the housing 41. That is, when the housing 41 is viewed along the axial direction of the bearing 42, the temperature detection device 43 overlaps with a portion of the housing 41 where a stress generated by the force acting from the bearing 42 is maximized.

Therefore, when the temperature of the bearing 42 and the temperature of the housing 41 increase due to the load from the shaft member 31, the temperature detected by the temperature detection device 43 increases in response to the temperature increase of the housing 41 early due to the location of the temperature detection device 43 in the arrangement region R1 as described above.

As described above, the temperature detected by the temperature detection device 43 is stored in the terminal device 4 via the reader/writer 3. Furthermore, when the temperature detected by the temperature detection device 43 is equal to or greater than a predetermined temperature, the terminal device 4 determines that there is an abnormality in the bearing 42. Therefore, by positioning the temperature detection device 43 in the arrangement region R1, it is possible to detect an abnormality in the bearing 42 early.

As described above, according to the present embodiment, the mechanical component 40 includes: the housing 41; the bearing 42 that is disposed in the housing 41 and rotatably supports the shaft member 31 with respect to the housing 41; and the temperature sensor 43b that is disposed on the outer surface of the housing 41 and detects the temperature of the housing 41. When the housing 41 is viewed along the axial direction of the bearing 42, the temperature sensor 43b overlaps with the portion of the housing 41 where a stress generated by the force acting from the bearing 42 is maximized.

With this configuration, the temperature sensor 43b is disposed on the outer surface of the housing 41. This makes it possible to simplify the configuration in the housing 41 and the configuration of the mechanical component 40. In addition, if a state change in the bearing 42 progresses due to the load from the shaft member 31, the temperature of the portion where the state change progresses is increased. The heat of the bearing 42 is transferred to the housing 41. In the portion of the housing 41 in contact with the portion of the bearing 42 where the state change progresses, the temperature increases earlier as compared to other portions of the housing 41. In addition, the portion of the housing 41 in contact with the portion of the bearing 42 where the state change progresses corresponds to a portion where a stress generated by the force acting from the bearing 42 is maximized. Accordingly, the temperature detected by the temperature sensor 43b increases early in response to the temperature increase of the bearing 42 and the temperature increase of the housing 41. This makes it possible for the mechanical component 40 to contribute to the achievement of early detection of an abnormality in the bearing 42 based on the temperature detected by the temperature sensor 43b.

The axis Ax of the bearing 42 is inclined with respect to the direction of gravity in a state where the housing 41 is attached to the support base 10. When the housing 41 is viewed along the axial direction of the bearing 42 in a state where the housing 41 is attached to the support base 10, the temperature sensor 43b is located on the lower side of the axis Ax of the bearing 42 in the direction of gravity.

With this configuration, a portion of the housing 41 located on the lower side of the axis Ax of the bearing 42 in the direction of gravity corresponds to a portion where a stress generated by the force acting from the bearing 42 is maximized. Accordingly, the increase in the temperature of the bearing 42 leads to, with reliability, an early increase in the temperature detected by the temperature sensor 43b. This makes it possible for the mechanical component 40 to contribute, with reliability, to the achievement of early detection of an abnormality in the bearing 42 based on the temperature detected by the temperature sensor 43b.

In addition, the mechanical component 40 includes the RFID tag 43a that is integrally formed with the temperature sensor 43b and transmits the temperature detected by the temperature sensor 43b to the reader/writer 3.

With this configuration, the mechanical component 40 can output the temperature detected by the temperature sensor 43b, with a simple configuration.

Next, the monitoring system 1 and the mechanical component 40 according to a modification of the embodiment of the present disclosure will be described, focusing mainly on its differences from the monitoring system 1 and the mechanical component 40 according to the above embodiment.

For example, the mechanical device 2 is not limited to a roller conveyor. The mechanical device 2 only needs to include a plurality of mechanical components 40 each including the bearing 42.

The mechanical component 40 is not limited to the plummer block. The mechanical component 40 only needs to include the bearing 42.

The RFID tag 43a may be an active-type RFID tag. In this case, the RFID tag 43a further includes a power source.

The adhesive member 43d may have elasticity. In this case, the adhesive member 43d includes: a sheet-like base having elasticity; and adhesive layers disposed on the surfaces of the base, for example. The base is formed of a foamed resin such as foamed polyethylene, for example. The vibration that would be transmitted from the housing 41 to the temperature sensor 43b and the RFID tag 43a when the mechanical device 2 is operating can be reduced by the elasticity of the adhesive member 43d.

The adhesive member 43d may be formed by curing an adhesive (for example, an epoxy adhesive). Alternatively, the adhesive member 43d may be a butyl tape having waterproofness and oil resistance.

Alternatively, the temperature detection device 43 need not include the adhesive member 43d. In this case, the temperature detection device 43 is fixed to the housing 41 by a bolt, for example.

The cover member 43c may have a shape that covers a part of the principal surface 43a2 of the substrate 43a1 in a state where the temperature sensor 43b is exposed.

The arrangement region R1 may be located at a position other than the -Z side of the axis Ax of the bearing 42 on the front surface F2 of the housing 41. As described above, when the housing 41 is viewed along the axial direction of the bearing 42, the temperature sensor 43b overlaps with the portion of the housing 41 where a stress generated by the force acting from the bearing 42 is maximized. For example, the position of the arrangement region R1 on the front surface F2 of the housing 41 varies depending on the posture of the mechanical component 40 attached to the support base 10. For example, when the attachment surface F1 is orthogonal to the direction of gravity and faces upward in the direction of gravity in a state where the mechanical component 40 is attached to the support base 10, the arrangement region R1 is located on the +Z side of the axis Ax of the bearing 42 on the front surface F2 of the housing 41. In addition, the position of the arrangement region R1 on the front surface F2 of the housing 41 varies depending on the direction of the load acting on the bearing 42 from the shaft member 31. For example, when the direction of the load acting on the bearing 42 from the shaft member 31 is the direction from the -X side to the +X side along the X direction, the arrangement region R1 is located on the +X side of the axis Ax of the bearing 42 on the front surface F2 of the housing 41 regardless of the posture of the mechanical component 40. The mechanical component 40 may be attached to the support base 10 in a state where the axis Ax of the bearing 42 extends along the direction of gravity.

FIG. 7 is a cross-sectional view of a temperature detection device 43 in a mechanical component 40 according to a first modification of the embodiment of the present disclosure.

The mechanical component 40 according to the first modification further includes a thermal conductive paste 143g. The thermal conductive paste 143g is, for example, silicone-based thermal conductive grease. The thermal conductive paste 143g is not limited to a silicone-based paste, and only needs to be a paste. Alternatively, the thermal conductive paste 143g may be a thermosetting resin (an epoxy resin, for example) containing particles of Ag, etc. having a relatively high thermal conductivity.

The thermal conductive paste 143g is filled in the third through-hole 43d1 in a state where the temperature detection device 43 is disposed in the housing 41. With this configuration, the temperature sensor 43b and the housing 41 are thermally connected to each other via the thermal conductive paste 143g.

In the mechanical component 40 according to the first modification, the heat of the housing 41 is transferred to the temperature sensor 43b via the thermal conductive paste 143g with higher efficiency as compared with the mechanical component 40 of the above embodiment.

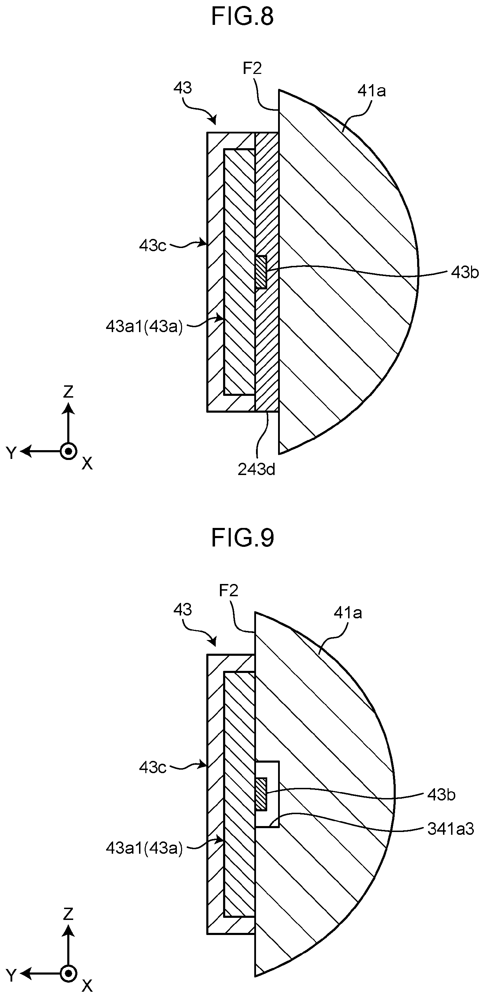

FIG. 8 is a cross-sectional view of a temperature detection device 43 in a mechanical component 40 according to a second modification of the embodiment of the present disclosure. In the second modification, an adhesive member 243d does not have the third through-hole 43d1. The adhesive member 243d covers the entire RFID tag 43a. With this configuration, the temperature sensor 43b is covered with the adhesive member 243d. With this configuration, the temperature sensor 43b and the housing 41 are thermally connected to each other via the adhesive member 243d.

In the mechanical component 40 according to the second modification, the heat of the housing 41 is transferred to the temperature sensor 43b via the adhesive member 243d with higher efficiency as compared with the mechanical component 40 of the above embodiment. The adhesive member 243d may contain particles of Ag, etc. having a relatively high thermal conductivity. In this case, the heat of the housing 41 is transferred to the temperature sensor 43b via the adhesive member 243d with even higher efficiency.

FIG. 9 is a cross-sectional view of a temperature detection device 43 in a mechanical component 40 according to a third modification of the embodiment of the present disclosure. In the third modification, the housing 41 has a recess 341a3 into which the temperature sensor 43b is fitted. The shape of the recess 341a3 is not particularly limited as long as the temperature sensor 43b can be housed. The shape of the recess 341a3 is desirably a shape in which the temperature sensor 43b comes into close proximity to the recess without being in contact with the recess even when the mechanical component 40 is in operation. The recess 341a3 may be filled with the thermal conductive paste 143g described above.

FIG. 9 omits illustration of the adhesive member 43d. In the third modification, the adhesive member 43d may be formed by curing a cyanoacrylate-based adhesive, for example. In this case, the thickness of the adhesive member 43d can be reduced.

In the mechanical component 40 of the third modification, the temperature sensor 43b is on the inner side of the recess 341a3, whereby the temperature sensor 43b can detect the temperature of the housing 41 with higher accuracy.

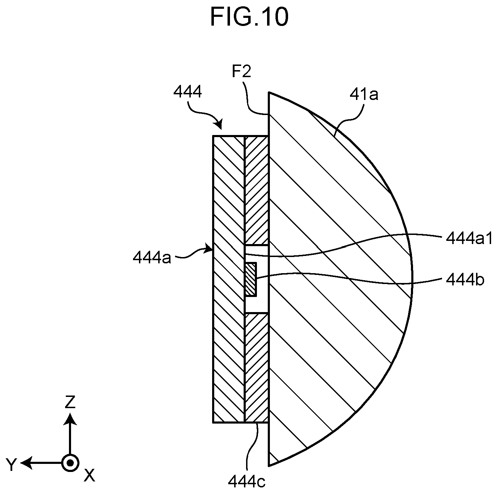

FIG. 10 is a cross-sectional view of a temperature detection device 444 in a mechanical component 40 according to a fourth modification of the embodiment of the present disclosure. The temperature detection device 444 of the fourth modification does not include the RFID tag 43a or the cover member 43c. A temperature detection device 444 of the fourth modification includes a substrate 444a, a temperature sensor 444b, and an adhesive member 444c. The temperature sensor 444b is disposed on a principal surface 444a1 of the substrate 444a. The substrate 444a includes a terminal that outputs a temperature detected by the temperature sensor 444b.

In this case, the monitoring system 1 does not include the reader/writer 3, and the terminal device 4 is electrically connected to the terminal of the substrate 444a to acquire the temperature detected by the temperature sensor 444b. The substrate 444a may include a display unit that displays the temperature detected by the temperature sensor 444b. In this case, the user may check the temperature detected by the temperature sensor 444b on the display unit and input the detected temperature to the terminal device 4.

The adhesive member 444c bonds the substrate 444a to the housing 41. The adhesive member 444c is a double-sided tape, for example. The temperature detection device 444 may include a cover member that protects the substrate 444a.

### Reference Signs List

- 1: MONITORING SYSTEM
- 2: MECHANICAL DEVICE
- 3: READER/WRITER
- 4: TERMINAL DEVICE
- 10: SUPPORT BASE (ATTACHMENT BASE MEMBER)
- 31: SHAFT MEMBER
- 40: MECHANICAL COMPONENT
- 41: HOUSING
- 42: BEARING
- 43a: RFID TAG
- 43b: TEMPERATURE SENSOR
- Ax: AXIS OF BEARING

## Claims

1. A mechanical component comprising:
a housing;
a bearing that is disposed in the housing and rotatably supports a shaft member with respect to the housing; and
a temperature sensor that is disposed on an outer surface of the housing and detects a temperature of the housing,
wherein, when the housing is viewed along an axial direction of the bearing, the temperature sensor overlaps with a portion of the housing where a stress generated by a force acting from the bearing is maximized.

2. The mechanical component according to claim 1,
wherein an axis of the bearing is inclined with respect to a direction of gravity in a state where the housing is attached to an attachment base member, and
when the housing is viewed along the axial direction of the bearing in a state where the housing is attached to the attachment base member, the temperature sensor is located on a lower side of the axis of the bearing in the direction of gravity.

3. The mechanical component according to claim 1, comprising
an RFID tag that is integrally formed with the temperature sensor and configured to transmit the temperature detected by the temperature sensor to a reader/writer.

4. A monitoring system comprising:
a mechanical device including a plurality of the mechanical components according to claim 3;
the reader/writer; and
a terminal device that is electrically connected to the reader/writer and configured to store the temperature detected by the temperature sensor.
